# EUROPEAN PATENT APPLICATION

(11) **EP 4 707 247 A1**
(43) Date of publication of application: **11.03.2026**
(21) Application number: 24818252.9
(22) Date of filing: 30.01.2024
(51) Int. Cl.: C02F 1/44, F04B 43/04

(54) **PORTABLE ELECTRICITY-FREE WATER PURIFICATION SYSTEM**

(30) Priority: 05.06.2023 CN 202321414332 U; 05.06.2023 CN 202321414295 U
(71) Applicant: MEMBRANE SOLUTIONS (NANTONG) CO., LTD, Nantong, Jiangsu 226010 (CN)
(72) Inventor: MA, Qizhen, Nantong, Jiangsu 226010 (CN); WANG, Longhai, Nantong, Jiangsu 226010 (CN); SONG, Deli, Nantong, Jiangsu 226010 (CN)
(74) Representative: 2K Patentanwälte Blasberg Kewitz & Reichel
(86) International application number: PCT/CN2024/074701
(87) International publication number: WO 2024/250714

(57) **Abstract**

This application belongs to the technical field of water purification apparatus and provides a portable non-electrical water purification system including: a filter element set including a pre-filter element and a mid-filter element, where the mid-filter element includes a reverse osmosis filter element, or a nanofiltration filter element, or an ultrafiltration membrane; a water pipeline including an inlet pipe head and an outlet pipe head, where, from the inlet pipe head to the outlet pipe head, the pre-filter element and the mid-filter element are connected in series to the water pipeline; a manual pressurizer provided on the water pipeline and located between the pre-filter element and the mid-filter element; and a case configured to accommodate all or part of the filter element set, the water pipeline, and the manual pressurizer, where the inlet pipe head and the outlet pipe head are connected to outside of the case.

## Description

### TECHNICAL FIELD

The present application relates to the technical field of water purification apparatuses, and in particular to a portable, non-electrical water purification system.

### BACKGROUND

In addition to fixed-installed water purification apparatuses, portable water purification apparatuses are also commonly used outdoors. These devices are typically required to purify poor-quality water in environments without access to power or energy. Since the water purified outdoors may be used for drinking, there is a high demand for portable water purification apparatuses in terms of water purification quality and efficiency. Compared to large-scale fixed-installed water purification apparatuses, the design requirements for portable water purification apparatuses are often diverse and complex.

In existing technology, to prioritize portability, portable water purification apparatuses often feature small filter elements and a limited number thereof. Some portable water purification apparatuses incorporate a built-in motor to power electric pumps and increase pressure, while others rely on manual pressurizers for this purpose. However, existing portable water purification apparatuses suffer from several shortcomings. They have a built-in motor, which increases the overall weight and size of the apparatus, making it inconvenient to carry and transport. If the motor fails, water purification becomes impossible. In manually pressurized water purification apparatuses, the position for setting the manual pressurizer often neglects the impact on the filter element. Sometimes the manual pressurizer is even connected to the exterior of the water purification apparatus, resulting in unsatisfactory pressure increase, low water purification efficiency, and poor water discharge. No matter what, meeting the comprehensive design requirements of being easy to carry and transport, requiring no power or energy, and providing high-quality and high-efficiency water purification is difficult.

### SUMMARY

In view of the above shortcomings of the conventional technique, the purpose of this application is to provide a portable non-electrical water purification system to solve the following problems in the conventional technique. That is, the built-in motor of the portable water purification apparatus increases the overall weight and size of the apparatus, and if the motor fails, water purification becomes impossible. Also, in manually pressurized water purification apparatus, the position for setting the manual pressurizer neglects the impact on the filter element, resulting in unsatisfactory pressure increase, low water purification efficiency, and poor water discharge. No matter what, meeting the comprehensive design requirements of being easy to carry and transport, requiring no power or energy, and providing high-quality and high-efficiency water purification is difficult.

In order to achieve the above purpose and other related purposes, this application provides a portable non-electrical water purification system. The portable non-electrical water purification system includes: a filter element set including a pre-filter element and a mid-filter element, wherein the mid-filter element includes a reverse osmosis filter element, or a nanofiltration filter element, or an ultrafiltration membrane; a water pipeline including an inlet pipe head and an outlet pipe head, wherein, from the inlet pipe head to the outlet pipe head, the pre-filter element and the mid-filter element are connected in series to the water pipeline; a manual pressurizer provided on the water pipeline and located between the pre-filter element and the mid-filter element; and a case configured to accommodate all or part of the filter element set, the water pipeline, and the manual pressurizer, wherein the inlet pipe head and the outlet pipe head are connected to outside of the case.

In some embodiments of the present application, the filter element set further includes a post-filter element, and from the inlet pipe head to the outlet pipe head, the pre-filter element, the mid-filter element, and the post-filter element are connected in series to the water pipeline sequentially.

In some embodiments of the present application, a water outlet end of the mid-filter element is connected to a drain pipeline, and a proportional valve is provided on the drain pipeline.

In some embodiments of the present application, a flushing pipeline is led out between the proportional valve and the mid-filter element, and a switching valve is provided on the flushing pipeline.

In some embodiments of the present application, the portable non-electrical water purification system further includes a pressure relief return pipeline, a water inlet end of the pressure relief return pipeline is connected to a water outlet end of the manual pressurizer or a water inlet end of the mid-filter element, a water outlet end of the pressure relief return pipeline is connected to a water inlet end of the manual pressurizer, and from the water inlet end of the pressure relief return pipeline to the water outlet end of the pressure relief return pipeline, a pressure relief device and a pressure relief return one-way valve are arranged in the pressure relief return pipeline.

In some embodiments of the present application, a pressure gauge is provided between the manual pressurizer and the mid-filter element.

In some embodiments of the present application, the inlet pipe head is connected with a filter head.

In some embodiments of the present application, an outlet faucet connected to the outlet pipe head is provided outside the case.

In some embodiments of the present application, the manual pressurizer includes a pressurizing pump, a speed-increasing gearbox, and a handle, the pressurizing pump is located inside the case, the handle is detachably located outside the case, and the speed-increasing gearbox is connected between the pressurizing pump and the handle.

In some embodiments of the present application, the pressurizing pump includes: a pressurizing pump housing, wherein an interior of the pressurizing pump housing includes a first chamber and a second chamber, the pressurizing pump housing is provided with a water inlet and a water outlet, and the water inlet and the water outlet are respectively connected with the first chamber; a flexible partition provided in the pressurizing pump housing and located between the first chamber and the second chamber; a pressurizing chamber housing located in the first chamber, wherein the pressurizing chamber housing and the flexible partition enclose to form a pressurizing chamber, the pressurizing chamber housing is provided with a first water channel connected to the water inlet and a second water channel connected to the water outlet, the first water channel is provided with an inlet one-way valve, and the second water channel is provided with an outlet one-way valve; and a driving part including a tilted shaft wheel disposed in the second chamber, a follower following the tilted shaft wheel, and a drive shaft connected to the tilted shaft wheel, wherein the follower is also connected to a portion that is of the flexible partition and that participates in enclosing to form the pressurizing chamber.

In some embodiments of the present application, a speed-increasing gear assembly is provided in the speed-increasing gearbox, the speed-increasing gear assembly includes a driving shaft connected to the handle, a first gear fitting around the driving shaft, a second gear meshing with the first gear, a driven shaft coaxially connected with the second gear, a third gear fitting around the driven shaft, and a fourth gear fitting around the drive shaft, the fourth gear meshes with the third gear, the number of teeth of the first gear is greater than the number of teeth of the second gear, and the number of teeth of the third gear is greater than the number of teeth of the fourth gear.

In some embodiments of the present application, a plurality of the pressurizing chamber housings are provided in the first chamber. each of the first water channels provided in the plurality of the pressurizing chamber housings merges at the water inlet, and each of the second water channels provided in the plurality of the pressurizing chamber housings merges at the water outlet.

To sum up, the portable non-electrical water purification system provided by this application has at least the following beneficial effects.

The pre-filter element can coarsely filter the water entering the water purification system, filter out large-sized particles, and avoid clogging and damaging the manual pressurizer and filter elements. The manual pressurizer is installed between the pre-filter element and the mid-filter element, stabilizing the water pressure at both ends of the manual pressurizer, which is beneficial to the stable operation of the system.

The combination of multi-stages of filter elements and the manual pressurizer makes it suitable for various scenarios without a power supply. It can not only improve the water purification quality of portable water purification apparatus, meet the needs of purifying outdoor harsh water, but also effectively control the overall size of the apparatus while ensuring purification efficiency. For portable water purification apparatuses, their comprehensive design requirements of being easy to carry and transport, requiring no power or energy, and providing high-quality and high-efficiency water purification are fully met.

### BRIEF DESCRIPTION OF DRAWINGS

FIG. 1 is a schematic view of an overall structure of a portable non-electrical water purification system according to exemplary embodiments of the present application;
FIG. 2 is an internal cross-sectional view of a manual pressurizer according to exemplary embodiments of the present application in which a tilted shaft wheel rotates to a position;
FIG. 3 is an internal cross-sectional view of a manual pressurizer according to exemplary embodiments of the present application in which a tilted shaft wheel rotates to another position;
FIG. 4 is an internal structural view of a manual pressurizer according to exemplary embodiments of the present application;
FIG. 5 is an axonometric view of an overall structure of a manual pressurizer with a handle installed according to exemplary embodiments of the present application;
FIG. 6 is a schematic view of the connection relationship of a manual pressurizer with a handle installed according to exemplary embodiments of the present application;
FIG. 7 is a schematic view of the cooperation relationship of a speed-increasing gear assembly in a manual pressurizer according to exemplary embodiments of the present application;
FIG. 8 is a partial cross-sectional schematic view of a manual pressurizer according to exemplary embodiments of the present application; and
FIG. 9 is a schematic view of an overall structure of a portable non-electrical water purification system according to another exemplary embodiment of the present application.

### Reference Numbers of Parts

11 - pre-filter element; 12 - mid-filter element; 13 - post-filter element; 2 - water pipeline; 21 - inlet pipe head; 211 - filter head; 22 - outlet pipe head; 221 - outlet faucet; 23 - drain pipeline; 231 - proportional valve; 24 - flushing pipeline; 241 - switching valve; 25 - pressure gauge; 3 - manual pressurizer; 31 - housing; 3101 - water inlet; 3102 - water outlet; 311 - first chamber; 312 - second chamber; 32 - flexible partition; 321 - recessed structure; 33 - pressurizing chamber housing; 3301 - first water channel; 3302 - second water channel; 331 - pressurizing chamber; 332 - pressure plate; 3321 - raised structure; 333 - inlet one-way valve; 334 - outlet one-way valve; 341 - tilted shaft wheel; 3411 - drive shaft bearing; 342 - follower; 3421 - connector; 3422 - claiming plate; 343 - drive shaft; 35 - handle; 36 - speed-increasing gearbox; 361 - driving shaft; 362 - first gear; 363 - second gear; 364 - driven shaft; 365 - third gear; 366 - fourth gear; 4 - case; 5 - pressure relief return pipeline; 51 - pressure relief device; 52 - pressure relief return one-way valve

### DESCRIPTION OF EMBODIMENTS

The following describes the implementation of the present application through specific embodiments. Those familiar with this technology can easily understand other advantages and effects of the present application from the content disclosed in this specification.

It should be noted that the structures, scales, sizes, etc. shown in the drawings attached to this specification are only used to coordinate with the content disclosed in the specification for the understanding and reading of people familiar with this technology, and are not used as limitations to the implementation of this application, and thus have no technical substantive significance. Any modifications to structures, changes in scaling relation, or adjustments in size still fall within the scope of the technical content disclosed in this application without affecting the effect generated and purpose achieved in this application. At the same time, terms such as "front", "back", "left", "right", "middle", "one", "two", etc. used in this application are only for the convenience of description and are not used to limit the implementable scope of this application. Changes or adjustments in relative relationships of these terms shall also be regarded as the implementable scope of this application as long as there is no substantial change in the technical content.

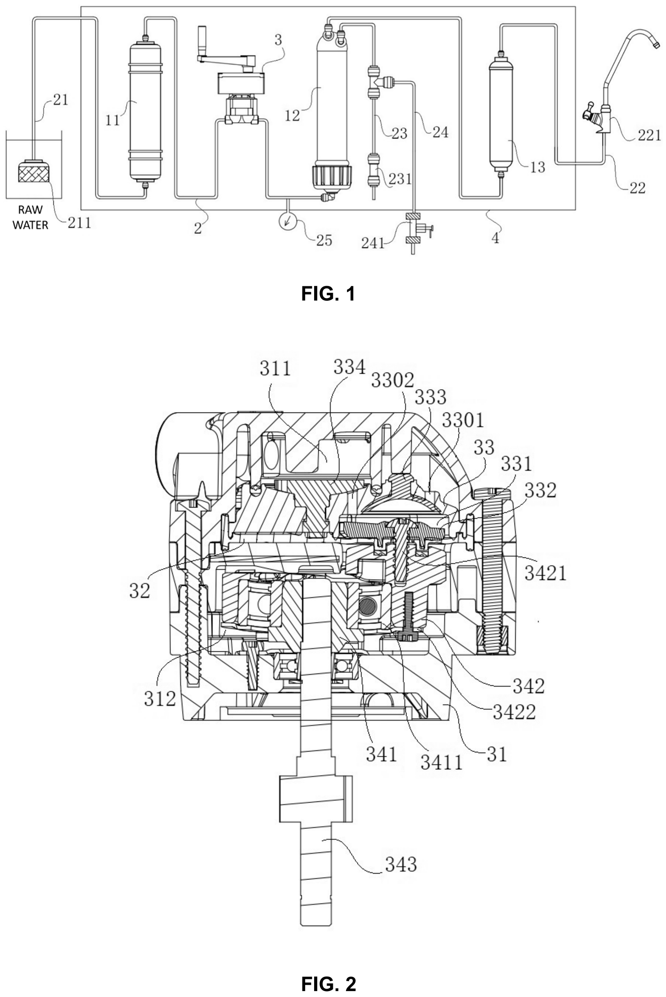

In exemplary embodiments, this application exemplarily shows portable non-electrical water purification systems. Please refer to FIG. 1. The portable non-electrical water purification system at least includes a filter element set, a water pipeline 2, a manual pressurizer 3, and case 4.

The filter element set includes a pre-filter element 11 and a mid-filter element 12. In exemplary embodiments, the mid-filter element 12 includes a reverse osmosis filter element, or a nanofiltration filter element, or an ultrafiltration membrane.

The water pipeline 2 includes an inlet pipe head 21 and an outlet pipe head 22. From the inlet pipe head 21 to the outlet pipe head 22, the pre-filter element 11 and the mid-filter element 12 are connected in series to the water pipeline 2. For example, along the direction of a raw water flow in the water pipeline 2, the pre-filter element 11 and the mid-filter element 12 are arranged in sequence on the water pipeline 2.

The manual pressurizer 3 is arranged on the water pipeline 2 and is located between the pre-filter element 11 and the mid-filter element 12. For example, the manual pressurizer 3 is located on the water pipeline 2 between a water outlet end of the pre-filter element 11 and a water inlet end of the mid-filter element 12.

The case 4 is used to accommodate all or part of the filter element set, the water pipeline 2, and the manual pressurizer 3. The inlet pipe head 21 and the outlet pipe head 22 are connected to or located outside of the case 4.

In exemplary embodiments, multiple stages of filter elements are provided. In exemplary embodiments, the mid-filter element 12 includes a reverse osmosis filter element or a nanofiltration filter element, by which pure water can be obtained through filtration. The filter membrane of the mid-filter element 12 has a relatively small pore size such that it may maintain relatively high efficiency in water purification and output under a high inlet water pressure. The pre-filter element 11 includes but is not limited to commonly used filter elements such as ultrafiltration membrane filter elements, which are used to purify incoming water. In exemplary embodiments, the combination of multiple stages of filter elements may effectively improve the quality of water purification. In exemplary embodiments, the manual pressurizer 3 provided between the pre-filter element 11 and the mid-filter element 12 may increase the inlet water pressure of the mid-filter element 12, effectively improving the water purification efficiency. In exemplary embodiments, the manual pressurizer 3 does not require additional power supply and driving parts to provide energy, and manual operation can achieve the increase of pressure, which may be conducive to reducing the overall space occupation inside the case 4. It can be seen that in the portable non-electrical water purification system provided in some exemplary embodiments, the combination of the multiple stages of filter elements and the manual pressurizer 3 makes it suitable for various non-power supply scenarios. In exemplary embodiments, the water purification quality of the portable water purification apparatus may be improved, and the need to purify outdoor harsh water may be met. In exemplary embodiments, the overall size of the apparatus may be effectively managed without compromising water purification efficiency. In exemplary embodiments, for portable water purification apparatuses, one or more of their comprehensive design requirements of being easy to carry and transport, requiring no power or energy, and providing high-quality and high-efficiency water purification may be met.

In exemplary embodiments, the pre-filter element 11 may perform rough filtration of the water entering the water purification system, filter out large-sized particles, and avoid clogging and damaging the manual pressurizer 3 and the filter elements. In exemplary embodiments, the manual pressurizer 3 is provided between the pre-filter element 11 and the mid-filter element 12. After manual pressurizing, the raw water flows into the water pipeline 2 after passing through the pre-filter element 11, so that a certain amount of raw water can be retained in the water pipeline 2 between the mid-filter element 12 and the pre-filter element 11 to avoid air from staying in the upstream pipeline of the manual pressurizer 3, thereby facilitating the smooth progress of pumping raw water and manual pressurizing. In exemplary embodiments, the pre-filter element 11 has the function of preventing the water passing through the filter element 11 from backflow, which can maintain a relatively stable pressure between the pre-filter element 11 and the mid-filter element 12, so that the manual pressurizer 3 may operate stably.

In exemplary embodiments, the filter element set also includes a post-filter element 13, which is located on the water pipeline 2 behind the mid-filter element 12 along the direction of the water flow. For example, from the inlet pipe head 21 to the outlet pipe head 22, the pre-filter element 11, the mid-filter element 12, and the post-filter element 13 are connected in series to the water pipeline 2. The post-filter element 13 includes but is not limited to commonly used filter elements such as ultrafiltration membrane filter elements, which are used to purify outlet water and improve the water purification effect of the water purification system. In exemplary embodiments, the water filtered out without the post-filter element 13 may still meet the drinking standard.

In exemplary embodiments, the water outlet end of the mid-filter element 12 is connected to a drain pipeline 23, and a proportional valve 231 is provided on the drain pipeline 23. The drain pipeline 23 is used for discharging wastewater.

In exemplary embodiments, a flushing pipeline 24 is led out between the proportional valve 231 and the mid-filter element 12. A switching valve 241 is provided on the flushing pipeline 24. The switching valve 241 is located outside the case 4 and can be opened and closed manually. Water can be produced normally when the switching valve 241 is closed. After the apparatus is used for a while, the switching valve 241 can be opened to flush the mid-filter element 12. That is, by opening the switching valve 241 and operating the manual pressurizer 3, the dirt on the mid-filter element 12 can be flushed away with raw water, and after flushing the wastewater is quickly discharged through the flushing pipeline 24, which may facilitate cleaning and maintenance and may be beneficial to extending the service life of the filter element.

In exemplary embodiments, a three-way valve is connected to the water outlet end of the mid-filter element 12, and the drain pipeline 23 and the flushing pipeline 24 are respectively connected to the other two ends of the three-way valve.

In exemplary embodiments, a pressure gauge 25 is provided between the manual pressurizer 3 and the mid-filter element 12. The dial of the pressure gauge 25 is located outside the case 4 and is used to monitor the fluid pressure in the water pipeline 2.

In exemplary embodiments, the inlet pipe head 21 is connected to a filter head 211, and the filter head 211 is used to roughly filter the raw water to reduce large impurities from entering the water pipeline 2.

In exemplary embodiments, an outlet faucet 221 connected to the outlet pipe head 22 is provided outside the case 4 for controlling the opening and closing of the outlet pipe head 22.

In exemplary embodiments, the manual pressurizer 3 includes a pressurizing pump, a speed-increasing gearbox 36, and a handle 35. The pressurizing pump is provided inside the case 4, the handle 35 is detachably located outside the case 4, and the speed-increasing gearbox 36 is connected between the pressurizing pump and the handle 35.

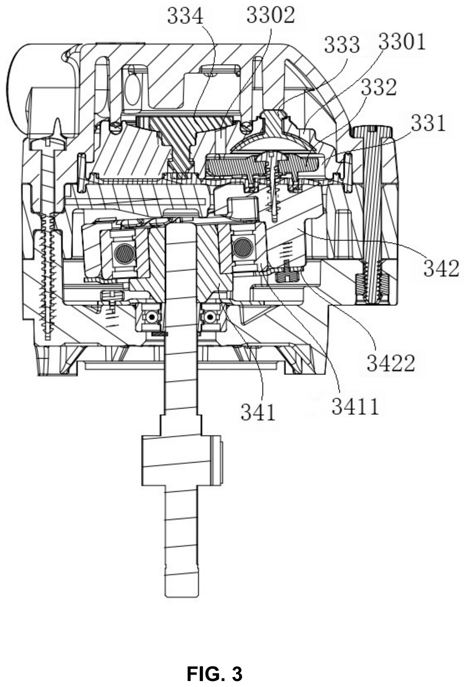

In exemplary embodiments, please refer to FIGS. 2-3. This application also exemplarily shows a structural solution of pressurizing pumps. In exemplary embodiments, the pressurizing pump includes a pressurizing pump housing 31, a flexible partition 32, a pressurizing chamber housing 33, and a driving part.

The pressurizing pump housing 31 refers to the outer shell structure of the entire manual pressurizer 3. The pressurizing pump housing 31 is provided with a water inlet 3101 and a water outlet 3102. In exemplary embodiments, the pressurizing pump housing 31 includes two detachable parts, which are assembled to form an integral pressurizing pump housing 31.

The flexible partition 32 is provided in the pressurizing pump housing 31 to partition the internal space of the pressurizing pump housing 31 into a first chamber 311 and a second chamber 312. The water inlet 3101 and the water outlet 3102 are respectively connected with the first chamber 311.

The pressurizing chamber housing 33 is located in the first chamber 311. The pressurizing chamber housing 33 and the flexible partition 32 enclose to form a pressurizing chamber 331. The pressurizing chamber housing 33 is provided with a first water channel 3301 connected to the water inlet 3101, and a second water channel 3302 connected to the water outlet 3102. A pressure plate 332 is provided in the pressurizing chamber 331. The position that the first water channel 3301 is connected with the internal space of the pressurizing chamber 331 and the position that the second water channel 3302 is connected with the internal space of the pressurizing chamber 331 are located on the same side of the pressure plate 332. The first water channel 3301 is provided with an inlet one-way valve 333, and the second water channel 3302 is provided with an outlet one-way valve 334. It can be understood that external water passes through the water inlet 3101 and the first water channel 3301, enters the pressurizing chamber 331, then exits the pressurizing chamber 331 through the second water channel 3302, and enters the water outlet 3102.

The driving part includes a tilted shaft wheel 341 and a follower 342 located in the second chamber 312, and a drive shaft 343 connected to the tilted shaft wheel 341. The follower 342 and the pressure plate 332 are connected through a connector 3421 of the flexible partition 32. When the drive shaft 343 drives the tilted shaft wheel 341 to rotate, the tilted shaft wheel 341 periodically pushes the follower 342 closer to and away from the flexible partition 32. It is worth mentioning that the tilted shaft wheel 341 refers to a wheel structure having an axial hole in which the center line is tilted. That is to say, when the drive shaft 343 passes through the tilted shaft wheel 341, two end surfaces of the tilted shaft wheel 341 are not perpendicular to the axis of the drive shaft 343.

In exemplary embodiments, the tilted shaft wheel 341 periodically pushes the follower 342 closer to and away from the flexible partition 32 during the rotation process, thereby driving a diaphragm to periodically swing in the pressurizing chamber 331 to change the pressure inside the pressurizing chamber 331 so that external water is sucked into the pressurizing chamber 331 from the first water channel 3301 and then pressurized and pushed out of the second water channel 3302. In exemplary embodiments, the above arrangement may have the characteristics of a compact structure, convenient operation, efficient water pumping, etc.

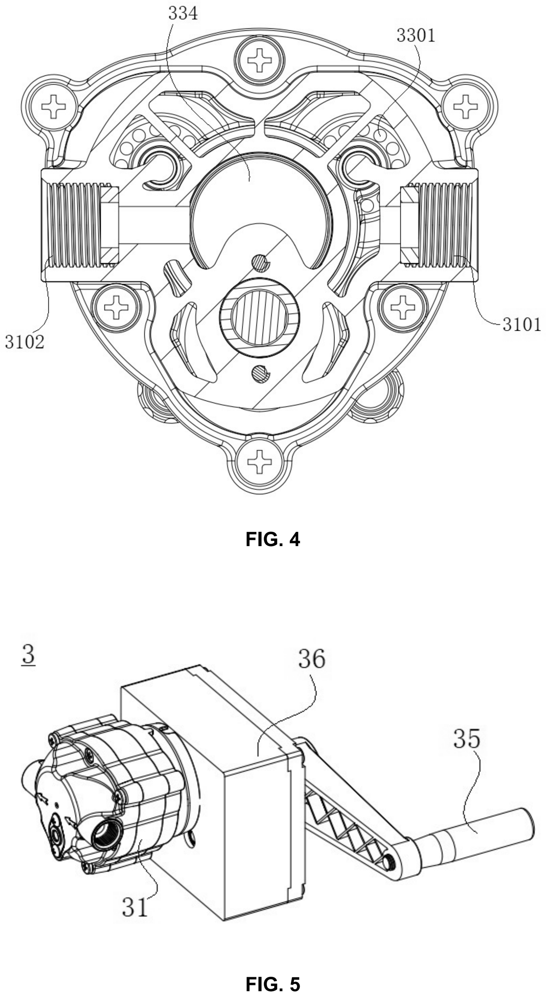

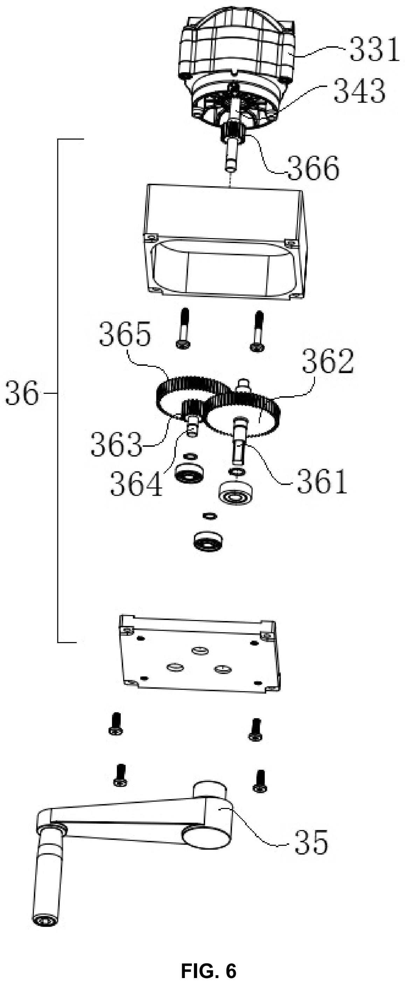

In exemplary embodiments, please refer to FIGS. 5-6. The drive shaft 343 extends out of the pressurizing pump housing 31. The manual pressurizer 3 also includes a handle 35 that is detachably connected to an extended end of the drive shaft 343. The rotation of the handle 35 drives the drive shaft 343 to rotate, which may be beneficial to improving the convenience of pumping and pressurizing water. In exemplary embodiments, the detachability of the handle 35 may be beneficial to further improving the portability.

In exemplary embodiments, please refer to FIGS. 5-7. The manual pressurizer 3 also includes a speed-increasing gearbox 36 connected between the pressurizing pump and the handle 35. A speed-increasing gear assembly is provided in the speed-increasing gearbox 36. For example, the speed-increasing gear assembly includes a driving shaft 361 connected to the handle 35, a first gear 362 fitting around the driving shaft 361 as a sleeve, a second gear 363 meshing with the first gear 362, a driven shaft 364 coaxially connected with the second gear 363, a third gear 365 fitting around the driven shaft 364 as a sleeve, and a fourth gear 366 fitting around the drive shaft 343 as a sleeve. The fourth gear 366 meshes with the third gear 365. The number of teeth of the first gear 362 is greater than the number of teeth of the second gear 363. The number of teeth of the third gear 365 is greater than the number of teeth of the fourth gear 366. In exemplary embodiments, increasing the speed through gear transmission may effectively reduce the driving force required for pumping water and further improve the convenience of water pumping.

For ease of understanding, please refer to FIGS. 2-3. FIGS. 2-3 respectively show the internal structural view of the portable apparatus when the tilted shaft wheel 341 rotates to different positions. In a cross-sectional direction inside the pressurizing pump housing 31, the follower 342 is located on the right side inside the pressurizing pump housing 31. When the tilted shaft wheel 341 rotates to the point where the left end is high and the right end is low, the follower 342 sinks, driving the pressure plate 332 to move downward in the pressurizing chamber 331. At this time, the pressure in the pressure chamber 331 decreases, and water enters the first water channel 3301. When the tilted shaft wheel 341 rotates to a position where the left end is low and the right end is high, the follower 342 lifts, driving the pressure plate 332 to move upward in the pressurizing chamber 331 to press the water out of the second channel 3302.

In exemplary embodiments, a drive shaft bearing 3411 fits around the tilted shaft wheel 341 as a sleeve. A first end surface of the drive shaft bearing 3411 abuts the follower 342. The follower 342 is detachably connected to a clamping plate 3422. The clamping plate 3422 abuts against a second end surface of the drive shaft bearing 3411 opposite to the first end surface and is used to cooperate with the follower 342 to clamp the drive shaft bearing 3411. In exemplary embodiments, the follower 342 is an L-shaped block structure. One end of the follower 342 abuts the first end surface of the drive shaft bearing 3411, and the clamping plate 3422 is installed at the other end of the follower 342. The clamping plate 3422 abuts the second end surface of the drive shaft bearing 3411. It can be understood that the clamping plate 3422 and the follower 342 respectively abut two end surfaces of the drive shaft bearing 3411. When rotating together with the tilted shaft wheel 341, the drive shaft bearing 3411 can accurately transmit the fluctuating state of the tilted shaft wheel 341 to the follower 342. In exemplary embodiments, the pressure plate 332 is connected to the follower 342 through a connector 3421 such as a screw. The flexible partition 32 has a hole for the insertion of the screw, and the pressure plate 332 fluctuates synchronously with the fluctuation of the follower 342 so that the air pressure in the pressurizing chamber 331 changes to achieve water pumping.

In exemplary embodiments, the outlet one-way valve 334 is located in the first chamber 311. The outlet one-way valve 334 includes an umbrella-shaped valve core. The umbrella end cover of the umbrella-shaped valve core is located at an end of the second water channel 3302 connected to the first chamber 311. In exemplary embodiments, the umbrella-shaped valve core is coaxially positioned with the drive shaft 343. A plurality of pressurizing chamber housings 33 is concentrically provided around the umbrella-shaped valve core. Each of the first water channel 3301 provided on the plurality of pressurizing chamber housings 33 merges into the water inlet 3101, and each of the second water channels 3302 provided on the plurality of pressurizing chamber housings 33 merges into the water outlet 3102. In exemplary embodiments, three pressurizing chamber housings 33 are provided in the form of a ring, and three pressurizing chambers 331 are formed. When the drive shaft 343 and the drive shaft bearing 3411 rotate with the tilted shaft wheel 341 for one turn, the three pressurizing chambers 331 each complete one cycle of the water suction and pumping, which may be beneficial to improving the energy conversion efficiency and enhancing pumping volume and pumping efficiency.

In exemplary embodiments, please refer to FIG. 2, FIG. 3, and FIG. 8. An engaging structure is provided between the pressure plate 332 and the flexible partition 32 for positioning between the pressure plate 332 and the flexible partition 32. The engaging structure includes a raised structure 3321 provided on the pressure plate 332 and a recessed structure 321 provided on the flexible partition 32. The raised structure 3321 is plugged into the recessed structure 321. The recessed structure 321 is recessed from the first chamber 311 toward the second chamber 312. It can be understood that on the one hand, the engaging structure can be used as a sealing structure. In exemplary embodiments, the raised structure 3321 is an annular wall surrounding the connector 3421, and the recessed structure 321 is an annular groove surrounding the connector 3421, which may be helpful to prevent the water in the pressurizing chamber 331 from seeping into the driving part from the connector 3421. On the other hand, the engaging structure may be used as a guide structure. In exemplary embodiments, the pressure plate 332 consistently remains engaged with the flexible partition 32, which may be beneficial for ensuring that the movement direction of the pressure plate 332 does not deviate and for improving the stability of water pumping.

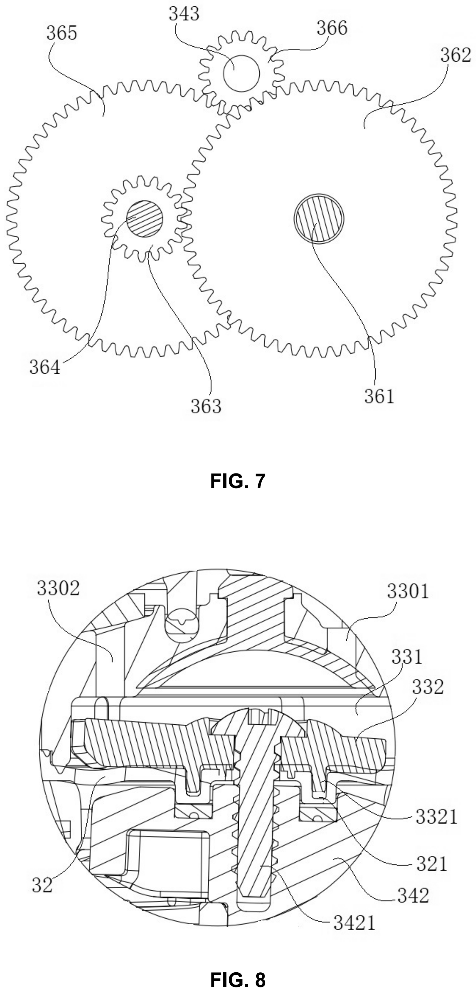

In exemplary embodiments, please refer to FIG. 8. The recessed structure 321 on the flexible partition 32 protrudes toward the second chamber 312. The upper end surface of the follower 342 is also provided with a groove to accommodate this protrusion, enabling a plug-in fit between the follower 342 and the flexible partition 32 to guide the up and down movement of the follower 342, further ensuring the accuracy of the movement direction.

In exemplary embodiments, the inlet one-way valve 333 is disposed in the pressurizing chamber 331 and is located at an end of the pressurizing chamber 331 that is connected to the first water channel 3301. For example, the inner wall of the pressurizing chamber 331 is recessed outward to form a space for accommodating the inlet one-way valve 333, which may be conducive to further reducing the space occupied by components while ensuring the volume of the pressurizing chamber 331, and improving the compactness of the overall structure.

In exemplary embodiments, the manual pressurizer 3 has a compact structure and high boosting efficiency, which may greatly meet one or more of the comprehensive design requirements of portable water purification apparatus, i.e., being easy to carry and transport, requiring no power or energy, and providing high-quality and high-efficiency water purification.

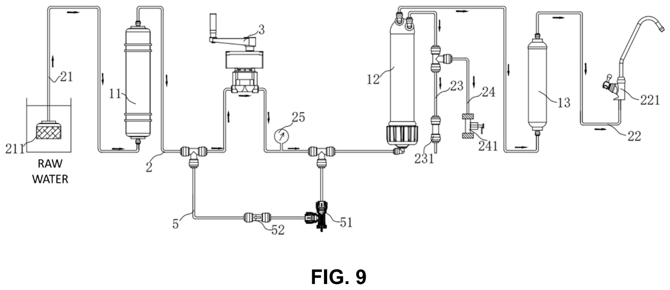

In exemplary embodiments, as shown in FIG. 9, the portable non-electrical water purification system further includes a pressure relief return pipeline 5. The case 4 is not shown in FIG. 9. Both ends of the pressure relief return pipeline 5 are connected to the water pipeline 2. A water inlet end of the pressure relief return pipeline 5 is connected to a water outlet end of the manual pressurizer 3, and a water outlet end of the pressure relief return pipeline 5 is connected to a water inlet end of the manual pressurizer 3. The direction of water flow in the pressure relief return pipeline 5 is from the water inlet end of the pressure relief return pipeline 5 to the water outlet end of the pressure relief return pipeline 5. That is, when the pressure in the water pipeline 2 is greater than a preset pressure value of a pressure relief device 51, the water flowing out of the water outlet end of the manual pressurizer 3 flows through the water inlet end of the pressure relief return pipeline 5 to the water outlet end of the pressure relief return pipeline 5 and finally flows back to the water inlet end of the manual pressurizer 3. In exemplary embodiments, the water inlet end of the pressure relief return pipeline 5 is connected with the water inlet end of the mid-filter element 12 or connected to the water pipeline 2 between the water outlet end of the manual pressurizer 3 and the water inlet end of the mid-filter element 12. In exemplary embodiments, the water inlet end of the pressure relief return pipeline 5 is connected to the water pipeline 2 through a three-way valve. The water outlet end of the pressure relief return pipeline 5 is connected back to the upstream of the manual pressurizer 3. For example, the water outlet end of the pressure relief return pipeline 5 is connected to the water inlet end of the manual pressurizer 3, or to the water pipeline 2 between the pre-filter element 11 and the manual pressurizer 3.

In exemplary embodiments, a pressure relief device 51 and a pressure relief return one-way valve 52 are arranged in the pressure relief return pipeline 5 along the direction of water flow. For example, the pressure relief device 51 may be a pressure control valve, specifically including, but not limited to, a pressurereducing valve, an overflow valve, a pressure relief valve, etc., and other devices that can actively relieve pressure after reaching a preset pressure. When the pre-membrane pressure of the mid-filter element 12 is greater than a preset pressure value of the pressure relief device 51 (in exemplary embodiments, the pre-membrane pressure of the mid-filter element 12 is the same as the pressure of the water outlet end of the manual pressurizer 3), the pressure relief device 51 begins to relieve pressure, and water flows from the pressure relief device 51 through the pressure relief return one-way valve 52 back to the water inlet end of the manual pressurizer 3. Due to the existence of the pressure relief return one-way valve 52, the water in the water pipeline 2 may be prevented from entering the pressure relief return pipeline 5 from the water outlet end of the pressure relief return pipeline 5, ensuring one-way return flow.

When the manual pressurizer 3 increases the pre-membrane pressure of the mid-filter element 12 in the water pipeline 2 to a certain value, the pre-membrane pressure of the mid-filter element 12 will be relatively large, and it will be difficult to continue to increase the pressure manually with the manual pressurizer 3. Moreover, the relatively large pre-membrane pressure will cause damage to the mid-filter element 12 and the post-filter element 13, affecting their service life. By providing the pressure relief return pipeline 5, after the pre-membrane pressure of the mid-filter element 12 reaches a specified value, the pressure can be automatically relieved through the pressure relief device 51, and the pre-membrane pressure can be actively released such that the pressure will not increase even if the operation to the manual pressurization device 3 continues. On the one hand, the operation is easier; on the other hand, the mid-filter element 12 is effectively protected to ensure the stable operation of the entire system and the service life of the membrane in the key filter element set. After the pressure is relieved, the water flows back to the water inlet end of the manual pressurizer 3 and can be used continuously to save water. After each pressure relief, the water purification system can be put back into normal operation without having to replace new filter elements and re-debug the system, which may ensure stable operation of the water purification system, save costs, and be convenient to use. Regarding the pressure relief conditions of the pressure relief device 51, different pressures may be set according to user needs. For example, if the pressure relief pressure is set to 50 PSI (pounds per square inch), active pressure relief will begin when the pressure reaches 50 PSI to ensure that the pressure in the system does not exceed 50 PSI.

In exemplary embodiments, when in use, raw water is sucked into the water pipeline 2 from the inlet pipe head 21 by operating the manual pressurizer 3, and the coarse particles are filtered through the pre-filter element 11. Then the water passes through the manual pressurizer 3 and enters the mid-filter element 12 for further filtration. Finally, the water is further filtered by the post-filter element 13 to improve the filtration effect of the raw water. The filtered pure water is supplied through the outlet pipe head 22 and the outlet faucet 221 for the user to use or drink.

When it is necessary to flush the mid-filter element 12, the manual pressurizer 3 is operated to increase the pressure of the raw water in the water pipeline 2. The raw water can flush the dirt on the mid-filter element 12. By opening the switching valve 241, the flushing wastewater will be discharged from the flushing pipeline 24.

The above embodiments only illustrate the principles and effects of the present application but are not used to limit the present application. Anyone familiar with this technology can modify or change the above embodiments without departing from the spirit and scope of the present application. Therefore, all equivalent modifications or changes made by those with ordinary knowledge in the technical field without departing from the spirit and technical ideas disclosed in this application shall still be covered by the claims of this application.

## Claims

1. A portable non-electrical water purification system, comprising:
a filter element set including a pre-filter element and a mid-filter element, wherein the mid-filter element includes a reverse osmosis filter element, or a nanofiltration filter element, or an ultrafiltration membrane;
a water pipeline including an inlet pipe head and an outlet pipe head, wherein, from the inlet pipe head to the outlet pipe head, the pre-filter element and the mid-filter element are connected in series to the water pipeline sequentially;
a manual pressurizer provided on the water pipeline and located between the pre-filter element and the mid-filter element; and
a case configured to accommodate all or part of the filter element set, the water pipeline, and the manual pressurizer, wherein the inlet pipe head and the outlet pipe head are connected to outside of the case.

2. The portable non-electrical water purification system according to claim 1, wherein:
the filter element set further includes a post-filter element, and
from the inlet pipe head to the outlet pipe head, the pre-filter element, the mid-filter element, and the post-filter element are connected in series to the water pipeline sequentially.

3. The portable non-electrical water purification system according to claim 2, wherein:
a water outlet end of the mid-filter element is connected to a drain pipeline, and
a proportional valve is provided on the drain pipeline.

4. The portable non-electrical water purification system according to claim 3, wherein:
a flushing pipeline is led out between the proportional valve and the mid-filter element, and
a switching valve is provided on the flushing pipeline.

5. The portable non-electrical water purification system according to claim 2, wherein:
the portable non-electrical water purification system further includes a pressure relief return pipeline,
a water inlet end of the pressure relief return pipeline is connected to a water outlet end of the manual pressurizer or a water inlet end of the mid-filter element,
a water outlet end of the pressure relief return pipeline is connected to a water inlet end of the manual pressurizer, and
from the water inlet end of the pressure relief return pipeline to the water outlet end of the pressure relief return pipeline, a pressure relief device and a pressure relief return one-way valve are arranged in the pressure relief return pipeline.

6. The portable non-electrical water purification system according to claim 2, wherein:
a pressure gauge is provided between the manual pressurizer and the mid-filter element.

7. The portable non-electrical water purification system according to claim 2, wherein:
the inlet pipe head is connected to a filter head.

8. The portable non-electrical water purification system according to claim 2, wherein:
an outlet faucet connected to the outlet pipe head is provided outside the case.

9. The portable non-electrical water purification system according to claim 2, wherein:
the manual pressurizer includes a pressurizing pump, a speed-increasing gearbox, and a handle,
the pressurizing pump is located inside the case,
the handle is detachably located outside the case, and
the speed-increasing gearbox is connected between the pressurizing pump and the handle.

10. The portable non-electrical water purification system according to claim 9, wherein, the pressurizing pump includes:
a pressurizing pump housing, wherein an interior of the pressurizing pump housing includes a first chamber and a second chamber, the pressurizing pump housing is provided with a water inlet and a water outlet, and the water inlet and the water outlet are respectively connected with the first chamber;
a flexible partition provided in the pressurizing pump housing and located between the first chamber and the second chamber;
a pressurizing chamber housing located in the first chamber, wherein the pressurizing chamber housing and the flexible partition enclose to form a pressurizing chamber, the pressurizing chamber housing is provided with a first water channel connected to the water inlet and a second water channel connected to the water outlet, the first water channel is provided with an inlet one-way valve, and the second water channel is provided with an outlet one-way valve; and
a driving part including a tilted shaft wheel disposed in the second chamber, a follower following the tilted shaft wheel, and a drive shaft connected to the tilted shaft wheel, wherein the follower is also connected to a portion that is of the flexible partition and that participates in enclosing to form the pressurizing chamber.

11. The portable non-electrical water purification system according to claim 10, wherein:
a speed-increasing gear assembly is provided in the speed-increasing gearbox,
the speed-increasing gear assembly includes a driving shaft connected to the handle, a first gear fitting around the driving shaft, a second gear meshing with the first gear, a driven shaft coaxially connected with the second gear, a third gear fitting around the driven shaft, and a fourth gear fitting around the drive shaft,
the fourth gear meshes with the third gear,
the number of teeth of the first gear is greater than the number of teeth of the second gear, and
the number of teeth of the third gear is greater than the number of teeth of the fourth gear.

12. The portable non-electrical water purification system according to claim 11, wherein:
a plurality of the pressurizing chamber housings is provided in the first chamber,
each of the first water channels provided in the plurality of the pressurizing chamber housings merges at the water inlet, and
each of the second water channels provided in the plurality of the pressurizing chamber housings merges at the water outlet.
